# EUROPEAN PATENT APPLICATION

(11) **EP 1 588 958 A2**
(43) Date of publication of application: **26.10.2005**
(21) Application number: 05008578.6
(22) Date of filing: 20.04.2005
(51) Int. Cl.: B65G 17/08, B26D 7/06

(54) **Clean Belt**

(30) Priority: 22.04.2004 DK 200400638
(71) Applicant: uni-chains A/S, 7100 Vejle (DK)
(72) Inventor: Damkjaer, Poul Erik, 7120 Vejte (DK)
(74) Representative: Tellefsen, Jens J.

(57) **Abstract**

A meat cutting belt for use in slaughterhouses, abattoirs and the like is described, where said belt comprises a plurality of substantially identical belt links, where each link is detachably connectable to adjacent belt links, and that each link has means for engagement with drive means arranged in a substructure, characterised in that
- the top surface of the belt links is suitable as a cutting surface;
- each link has a leading edge and a trailing edge, and that the link surface between said two edges is substantially continuous;
- each link has a width corresponding to the width of the belt;
- male engagement notches are provided along the leading edge, where each notch comprises a main body on which main body at least one stud is provided integral therewith, and that said at least one stud projects from the main body in a direction substantially parallel to the leading edge, and that further the stud has a largest cross section width of "a";
- female engagement means are arranged along the trailing edge, where said female engagement means comprises keyhole shaped apertures, extending substantially perpendicular to the cutting surface, and that the keyhole shaped aperture defines a neck portion and a substantially circular section, such that the width of the neck portion "b" is smaller or equal to "a" and that the diameter of the circular section is equal to or larger than "a".

## Description

The present invention relates to a meat cutting belt for slaughterhouses, abattoirs and the like as well as a belt link for use in such a meat cutting belt and furthermore a process for the manufacture of a belt of the type mentioned above.

Due to ever increasing demands for higher productivity, better hygiene and reliable machinery at affordable prices, there is a steady demand for ever improved equipment in the food processing industry. Of particular interest is the hygiene where fresh food products are being processed such as for example fish, meat and poultry.

Belts of this type are of the endless conveyor belt type. An endless belt is arranged about two turning wheels (sprocket wheels) in either end of the conveyor such that when the belt is travelling forward is understood the direction in which the top surface of the belt is facing upwards. At the return journey, the top surface is turned downwards.

The turning wheels or sprocket wheels will typically have engagement means for propelling the endless belt.

In the food processing industry, especially when fresh foods are concerned, there is an ever increasing demand for better hygiene. One of these requirements is that conveyor belts constructed by assembling a number of substantially identical belt links must be easy to clean and free from recesses or corners where cleaning may be difficult or all together impossible. For this reason in a number of circumstances, it is a requirement that the conveyor belts are removed from the installation and placed in disinfection bath. According to circumstances, the intervals between the removals of the belts may vary, but a not uncommon requirement is that the belt is removed and disinfected once every twenty four hours. The disinfection process in the disinfection bath may last a few hours. In addition to the time spent in the disinfection bath, the working time for disassembling and after disinfection, assembling the belt again is quite considerable.

One example of a known belt is described in WO 97/28072. This belt is assembled from a multitude generally identical chain links, where adjacent chain links are assembled by inserting protrusions provided on eye parts along one edge of the link into recesses provided along the opposite edge, where the protrusions are arranged protruding generally perpendicular to the travelling direction of the assembled belt structure. One drawback of this construction is the fact that the protrusions have a combined shape of a circle and a rectangle such that the two parallel sides are used in order to assemble the links, whereafter the two assembled links are pivoted in relation to each other. By the fact that the distance between the two parallel sides is less than the round sides (being part of a circle), the pivoting movement of the two adjacent chain links will safeguard that the links will not disengage as long as the chain links are on a substantially straight stretch. When, however, the belt according to WO 97/28072 is used with small radius sprocket wheels, the relative angle between two adjacent chain links will be at a relatively sharp angle whereby unintended disengagement might occur. Furthermore, the space between the two parallel sides of the protrusions and the U-shaped recess creates a space into which debris and other matter may become lodged. This space is very difficult to clean effectively, whereby the entire hygienic standard of the construction may be jeopardised.

The disinfection is necessary in order to assure that no organic matter which may give rise to bacteria growth and thereby infection of the fresh food products occurs in the equipment used for the preparation/processing of these fresh food products, meat, fish and poultry in particular.

There is therefore a demand for a cutting belt which provides the user with a steady and substantially homogeneous surface and which at the same time is relatively easy to dismantle in order to be able to disinfect the cutting belt. Furthermore, the belt structure should not have inaccessible constructions as in the case with prior art constructions. After disinfection, the belt should also be very easy to reassemble in order to keep the down time of the cutting belt to a minimum.

The present invention addresses this by providing a meat cutting belt for use in slaughterhouses, abattoirs and the like, where said belt comprises a plurality of substantially identical belt links, where each link is detachably connectable to adjacent belt links, and that each link has means for engagement with drive means arranged in a substructure, characterised in that
- the top surface of the belt links is suitable as a cutting surface;
- each link has a leading edge and a trailing edge, and that the link surface between said two edges is substantially continuous;
- male engagement notches are provided along the leading edge, where each notch comprises a main body on which main body at least one stud is provided integral therewith, and that said at least one stud projects from the main body in a direction substantially parallel to the leading edge, and that further the stud has a largest cross section width of "a";
- female engagement means are arranged along the trailing edge, where said female engagement means comprises keyhole shaped apertures, extending substantially perpendicular to the cutting surface, and that the keyhole shaped aperture defines a neck portion and a substantially circular section, such that the width of the neck portion "b" is smaller or equal to "a" and that the diameter of the circular section is equal to or larger than "a".

In this manner, a belt structure may be assembled which needs some force to assemble and disassemble when the chain links are cold, but which on the other hand does not accidentally disassemble due to the size of the sprocket wheels. Furthermore, as the notches (male engagement means) are substantially round and corresponding in size to the female engagement means such that only negligible if any material may become lodged between the male, respectively female engagement means.

In a further advantageous embodiment each link has a width perpendicular to the intended travelling direction corresponding to the width of the belt.

By providing the links with the width corresponding to the width of the belt, the cutting surface will only have divisions perpendicular to the travelling direction whereas from the prior art, it was known to construct a belt from a number of smaller links which were arranged in a brick pattern such that in addition to the divisions perpendicular to the travelling direction also divisions between adjacent belt links in the brick laying pattern in a longitudinal direction were present.
Thereby, two main problems are present. Firstly, the longitudinal divisions also make it possible for liquids such as blood, juices or other liquids to seep through the belt and partly become lodged in a division between two adjacent chain links. Furthermore, cleaning of the divisions in the longitudinal direction is quite difficult in that no relative displacement of these divisions occur during the travelling of the belt whereby these divisions are a major cause of hygienic uncertainty. The divisions perpendicular to the travelling direction are more or less exposed as the belts turns around the drive means arranged in either end of the conveyor belt whereby a relative displacement of two adjacent chain links makes it possible to access the gap/division for example by means of a high pressure water jet. The second drawback is that once the conveyor belt is dismantled for example traditionally by removing an assembly pin connecting overlapping eye sections in adjacent belt links, the number of neighbouring belt links making up the width of the belt must be precisely aligned in the assembly situation in order to make it possible to reinsert the pin whereby the belt is reassembled.

For belts where the connection is made by a pin connection, i.e. that overlapping eye portions in adjacent belt links create a through-going aperture perpendicular to the travelling direction into which a connection pin is inserted also creates a lot of non-accessible spaces in the multiple eye portions where thorough and satisfactory cleaning is impossible. Therefore, by providing an assembly system without apertures and pins, the hygienic standard is greatly improved.

From the prior art document, EP 0173865, a conveyor chain is known which comprises a number of inter-connected links where the interconnection is provided by means of hooks and posts. The hooks have an interior dimension substantially corresponding to the outer dimension of the transversely extending post such that by inserting the post of one chain link into the hook portion of an adjacent chain link, the post will engage the hook section such that it is possible to transfer forces from one link to the adjacent link whereby a conveyor chain is constructed. In order to maintain the post in engagement with the hook, a detents is provided in either side of the hook for engagement with the post such that considerable force is necessary in order to overcome the force of the detents. Furthermore, this construction is not suitable for repeated disassembly and assembly in that the detents will become worn and thereby the integrity of the chain/belt will become questionable. Also a further disadvantage with the prior art assembly method is the fact that the hooks have their open position upwards such that any debris which comes from transportation of items on the chain/belt will become lodged at the lowermost portion of the hook and possibly be squeezed by the post such that removal and cleaning is exceptionally difficult.

Consequently, the assembly of the present invention whereby studs are inserted into a keyhole is advantageous in that the relative size of the neck of the keyhole corresponds to or is less than the outer dimension of the stud such that it is possible to force the stud through the neck portion where after it arrives in the circular section which has a diameter slightly larger than the outer dimension of the stud such that free pivotal movement of two adjacent chain links is provided for, but at the same time due to the relative sizing of the neck portion of the female engagement means in relation to the stud portion of the male engagement, a relatively firm connection is provided between two adjacent chain links.

In a further advantageous embodiment, the leading and trailing edges of the belt links are parallelly and mutually offset in the belts longitudinal direction, such that a substantial constant gap of less than 3 mm, preferably less than 2 mm and most preferred less than 1 mm occurs between the leading and trailing edges of adjacent belt links, when the belt is travelling horizontally.

This embodiment is of particular interest where personnel is actually using the top surface of the cutting belt as a work surface in that the likelihood of tools such as knives becoming stuck in the divisions between adjacent chain links is minimised. The mutually off-setting of the edges provides only very limited straight sections in which a knife or other tool may become stuck and at such, the safety in this aspect is improved. If tools become stuck in a moving belt and particularly when knives become stuck, the movement of the belt in relation to the personnel holding the tool causes especially the blade of a knife to act as a spring such that if the knife snaps or the person using the knife lets go of the knife, the spring action in the knife blade may cause parts of the knife to launch and thereby become a danger in the ambient environment. This risk is greatly minimized in that the risk of having for example a knife blade become stuck in the division between two adjacent chain links is greatly reduced due to the offset pattern.

In a further advantageous embodiment, the female engagement means are provided in an engagement section, said engagement section extending rearwardly of the belt link, such that the trailing edge of each link comprises engagement sections alternating with cut-outs substantially corresponding to the engagement notches on an adjacent belt link, and that optionally the engagement sections rearmost vertical projection on a substantial part of the surface of the engagement section is offset in the longitudinal direction of the belt, and that corresponding forward offset section is provided in the leading edge.

By providing the female engagement sections, rearmost section with an offset portion in combination with a corresponding projection on the leading edge of an adjacent belt link, the top surface of the belt in use is substantially continuous, but as soon as the belt turns around the turning device at the end of the conveyor, the relative pivotal movement between the two links will due to the recess in the female projection open up a gap which facilitates cleaning of this gap in that the due to the recess in the female engagement section and opening substantially larger than the opening in its horizontal position occurs.

In a further advantageous embodiment, the stud is provided with two parallel straight sections, which sections are parallel to the top surface of the link, such that the distance between the parallel straight sections is less than "a".

Although it is possible to disassemble two adjacent belt links simply by pulling the studs out of the female engagement section especially the keyhole shaped apertures, but by providing the stud with two parallel straight sides, the disassembly is further facilitated. By turning one belt link into an angle of approximately 90 degrees in relation to the neighbouring belt link, the two straight parallel sections having a mutual distance less than "a" will be aligned with the neck portion of the adjacent belt links keyhole, whereby relatively easy removal of one belt link in relation to the other in a direction substantially perpendicular to the surface of the first link will be facilitated.
In a further advantageous embodiment, the underside of each link comprise a ridge, arranged parallel to the leading and trailing edges, and that the lowermost point of said ridge, when the top surface is horizontal is at the same level as the lowermost points of the engagement notches and female engagement means, and that from the lowermost points of the ridge the material thickness of the belt link diminishes towards the leading and trailing edges respectively, such that the material thickness along the edges is substantially nil, apart from the sections where engagement means and notches are provided.

As the belt links are assembled as described above into a cutting belt of the endless conveyor type, the underside of each belt link will be facing upwards on the return journey of the links. In this position, it is important that any liquid present is able to drain off the links such that as the links turn around the drive mechanism at the end of the conveyor, they will reach the top of the conveyor whereby the top surface of each link will again be the working surface in a condition where liquid stemming from the meat items placed on the conveyor and/or any cleaning action taking place at the end of the conveyor has drained off such that the belt link is substantially clean as it progresses down the top of the conveyor belt. This is facilitated by having the underside of the belt sloping away from the top of the ridge for the accession of the notches and female engagement means. Advantageously all surfaces on the notches and the female engagement means are likewise provided with sloping surfaces such that any liquid will drain off due to gravity.

In order to further improve each link's ability to drain off liquid, the uppermost part of the circular section of the circular section of the keyhole apertures, when the top surface is horizontal, slopes upwards, such that drainage of liquid trapped in the keyhole is facilitated. In this configuration, the keyholes again when the top surface is facing downwards on the return journey of the conveyor belt, will be able to drain off liquid which may otherwise become stuck inside the keyhole aperture between the aperture and the stud inserted into the female engagement means.

The invention also concerns a belt link for use in a meat cutting belt as described above characterised in that the link is made from an injection mouldable material in an injection moulding process. It is possible to use materials in the injection moulding process which from a hygienic point of view are very desirable and from a workable point of view creates a top surface which is officially hard and durable such that a long life expectancy may be predicted for this type of belt links when used in a meat cutting belt as described above.

Furthermore, the invention also describes a process for the manufacture of a belt as described above wherein during the injection moulding process the leading edge is maintained at a lower temperature than the trailing edge, and that belt links are assembled immediately after leaving the injection moulding machine, such that the insertion of the studs into the female engagement means on adjacent links is eased due to the different temperatures and thereby different relative thermo-dependent sizes of the studs and neck portions respectively.

During the injection moulding process, the injection moulding material which normally is a polymer material is heated such that the material itself is in a semi-liquid stage. By forcing the material into a mould for example a two part mould, it is possible to very quickly create a finished belt link.

The polymers traditionally used for injection moulding processes have a tendency to creep as they are cooled. For the present type of material, the creep may be estimated to roughly two per cent. By using this aspect, it is possible to assemble a belt such that very little force is necessary in the assembly phase.

As the individual links are injection moulded, a temperature difference is used in order to have the studs made relatively smaller in dependence of a lower temperature whereas the female engagement means are relatively larger due to a relatively elevated temperature such that when the studs are inserted in the female engagement sections, i.e. the keyhole shaped apertures due to the difference in thermo expansion properties caused by the different temperatures, this aspect will make it relatively easy to insert the studs into the female engagement sections. As the creep of the materials is largest during the first period of time relating to the cooling of the objects, the female engagement sections will shrink around the studs such that after a period of time, the connection between the studs and the keyhole apertures is such that a pivotable connection is created whereas by using a minimum of force, it is also possible to detach the links by forcing the studs through the neck portion of the keyhole apertures.

In practice, the injection mould may be constructed such that the temperature in the area of the mould where the notches and studs are formed is approximately 30-40 degrees less than the temperature of the mould surrounding the female engagement sections.

As the moulded belt link leaves the mould, it is received on a conveyor and immediately assembled such that the male notches comprising the studs are inserted into the keyhole apertures of a belt link already present on the conveyor. By creating a conveyor having a suitable length, it is possible in this manner to transport the assembled belt links along the conveyor for a suitable period of time such that sufficient creep and shrinkage due to the lowering of the temperature in the material has occurred before the conveyor unloads the assembled belt directly into a packaging crate or the like. In this manner, a very streamline production is provided with a minimum of labour which also in practice makes it relatively fast to assemble the finished conveyor belt in place on the cutting conveyor.

The invention will now be explained with reference to the drawing wherein
- fig. 1: illustrates an embodiment of a belt section,
- fig. 2: illustrates the assembly principle,
- fig. 3: illustrates the assembly principle,
- fig. 4: illustrates a male notch,
- fig. 5: illustrates a side view of a male notch, and
- fig. 6: illustrates a cross section through a female engagement means.

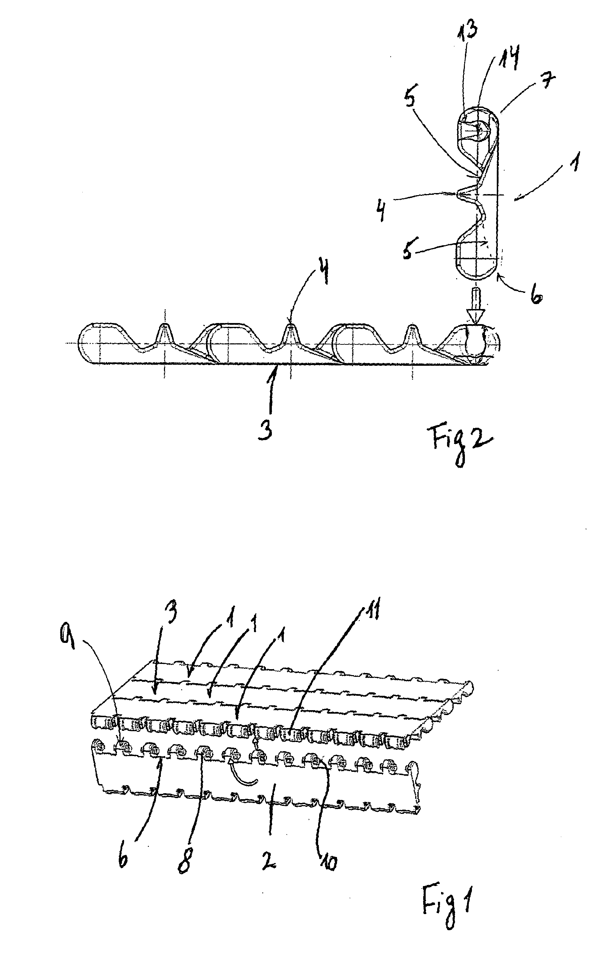

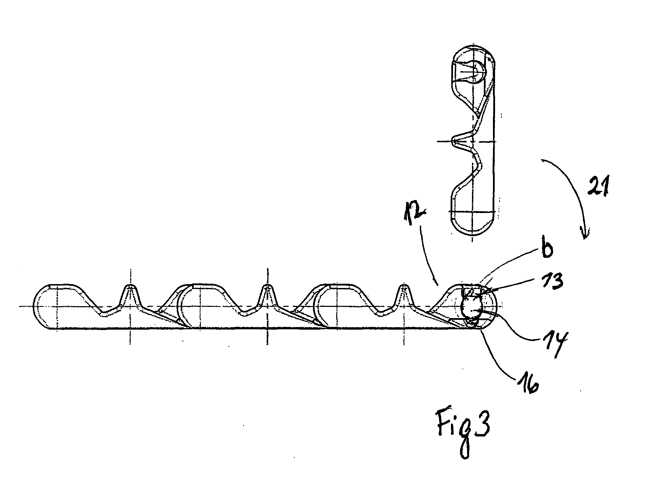

In fig. 1, three assembled belt links 1 according to the invention are illustrated and a fourth belt link 2 is being prepared to be connected to the adjacent belt link 1. By successively connecting a number of substantially identical chain belt links 1, an endless conveyor having a substantially continuous top surface 3 may be created.
For a user, the cutting surface is very important. The surface must be durable enough to withstand the continuous use of tools such as knives etc. and at the same time be steady enough in order to support a stable working surface, and furthermore, it must be possible to clean the surface to such a degree that no contamination risk arises from such a surface. Therefore, turning to fig. 2, an embodiment of the invention is illustrated having the top surface 3 facing downwards corresponding to the return travel of the conveyor belt. Each belt link 1 is on its underside provided with a ridge 4. The ridge 4 serves to strengthen the top surface 3 of the link between the leading and trailing edge such that the top side 3 of the link may be used as a durable working surface. From the top of the ridge 4, the material thickness tapers away forming sloping sides 5 which facilitates draining off of any liquid which may have assembled on the back side of link 1. The material taper continues towards the leading edge 6 as well as the trailing edge 7.

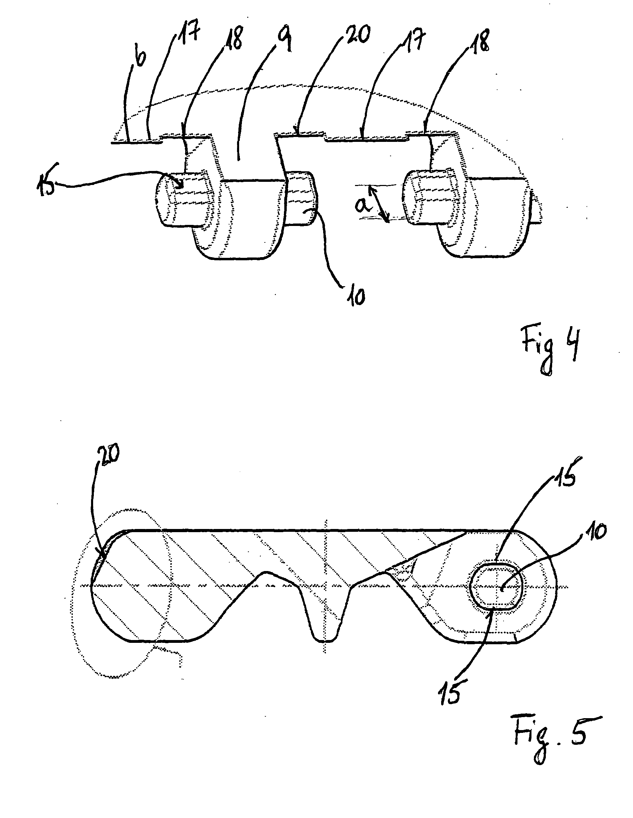

Along the leading edge 6 as illustrated in fig. 4, a number of male engagement notches 8 is provided. Each notch comprises a main body 9 on which studs 10 extend perpendicularly to the longitudinal direction of the assembled belt and thereby parallel to the leading edge. In either end of the link, the studs 10 only project toward the centre of the link such that the finished link and thereby the finished belt will have a side edge free from projecting studs.

At the trailing edge 7 of the links, corresponding female engagement sections 11 are provided. The female engagement section comprises a keyhole shaped aperture 12 which comprises a neck portion 13 and a circular section 14. Turning to fig. 3, the opening of the neck portion 13 has the width equal to or less than "a". The diameter of the substantially circular section 13 has a diameter which is equal to or larger than "a".

Turning to fig. 4, a detailed view of male section is illustrated. The male section comprises as explained above, male engagement notches 9 on which projecting studs 10 are arranged. The studs 10 are dimensioned such that their diameter is equal to or larger than "a". In this manner, it is necessary to force the studs into and out of engagement with the neck portion of the keyhole shaped aperture 12, but once the stud has passed the neck and has come to rest in the substantially circular section 14, there is sufficient space such that the studs can easily and freely move in relation to the wall of the aperture 14.

In a further advantageous embodiment as explained above, the studs may be provided with substantially straight edges 15 such that by inserting the chain link as illustrated in fig. 3 in a direction substantially perpendicular to the top surface of the belt, the stud having the straight sections 15 parallel to the top surface and having mutual distance "b" between the two straight surfaces b of less than "a" may easily be slid through the neck portion and by turning the belt link as indicated by the arrow 21 in fig. 3 into a position where the top surface of the belt link to be inserted is substantially flushed with adjacent belt links, the studs are maintained inside the substantially circular section 14 of the keyhole aperture 12 of the belt link. As the non-straight sections of the studs still represent a circular stud having a diameter of "a". In this manner, it is possible to relatively easy insert and retract adjacent elements by tilting these elements into a substantial perpendicular relationship with respect to the top surface such that the parallel straight edges of the studs will be arranged parallel to the inside walls of the neck portions 13 whereby due to the distance "b" between the two parallel straight sides of the stud 15 being equal to or less than "a", and the distance between the walls of the neck portions 13 of the keyhole aperture 12 being "a" relatively unhindered insertion and removal is facilitated.

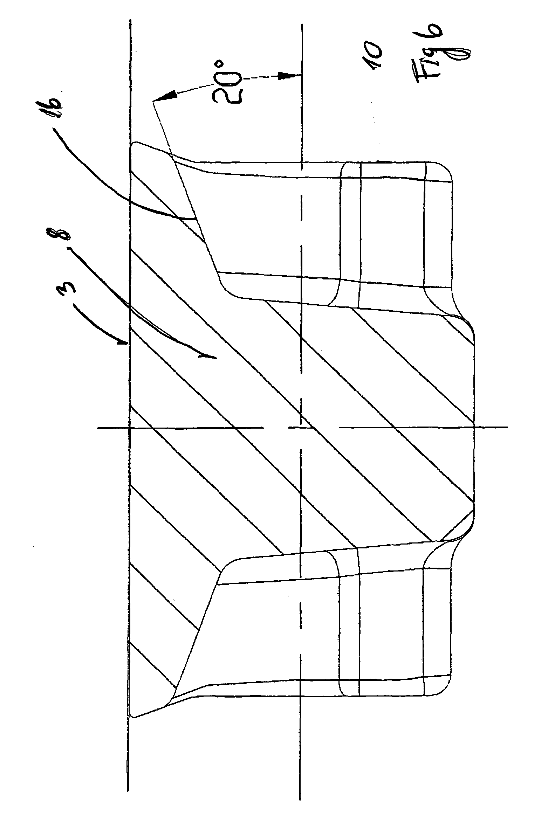

In fig. 5, it is illustrated the substantially parallel straight sections 15 on the stud 10. The keyhole aperture 12 comprising a neck portion 13 and a substantially circular section 14 provides a reliable fastening for the male engagement notches comprising the studs. In order to drain any liquid from the keyhole aperture, the uppermost part of the aperture in the use situation which as depicted in fig. 6 slopes upwards for example as illustrated by 20 degrees. The upwards slope 16, corresponding to the bottom of the circular section as illustrated in fig 2 will, when the conveyor is on its return track, i.e. the top surface is facing downwards, provide for drainage such that any liquid which may otherwise be present in the keyhole aperture can drain out along the slope 16. This again minimises the possibility for the occurrence of bacteria growth during use but does not solve the general problem of cleaning the belt which according to the present invention is cleaned by being able to easily dismantle and assemble the belt due to the arrangement of notch studs fitting in the female engagement means as described above.

A further feature for improving the possibility of cleaning the conveyor while in use is the provision of an expanding gap between two adjacent belt links as these are turned around the drive means in either end of the conveyor. When the top surface is the working surface, it is desirable to have as small divisions as possible in the top surface. This serves the purpose of providing a substantially continuous working surface and at the same time providing enough flexibility such that the conveyor belt may be turned around in either end. By furthermore creating the leading edge and the trailing edge 6,7 in a staggered relationship, the division between two adjacent chain links is furthermore provided with a number of advantages. Turning again to fig. 4, the leading edge 6 is illustrated.

Had the leading edge been a straight line clear across the belt link, it would have been possible for personnel working along the belt to have a knife or other tool stuck in this gap between two adjacent belt links. By providing a staggered leading and trailing edge 6,7 for example as illustrated in fig. 4 by providing the zones 9,17,18,19 repeatedly along the leading edge, only very short sections where it is possible to insert a knife or other tool becomes available. Thereby, it is achieved that the likelihood of personnel working on the belt has tools which become stuck in the divisions between two adjacent chain links is minimised.

Furthermore, in order to improve the cleaning possibilities of the belt links according to the invention, the vertical projections of the female engagement notches along the trailing edge are provided with recesses 20. When the working surface of the belt is facing upwards, the recesses 20 will be covered by the offset projections 18 on the leading edge. As the belt turns around the turning wheels in either end of the conveyor, the gap will open up between the recess 20 and the projection 18 in order to facilitate cleaning for example by high pressure water jets. The offset projection 18 has a thickness on the leading edge which approximates zero due to the sloping as explained with reference to fig. 2. Therefore, as the adjacent belt links pivot in relation to each other, this gap will open up and thereby facilitating cleaning.
Above, the links for constructing the inventive belt has been explained with respect to a link having male notches along one edge and female engagement means along the opposite edge. It should however be noted that the inventive principle may also be utilised by combining links where on a first type of links male notches are arranged along both edges, with a second type of links where the female engagement means are arranged along both edges, such that by alternatively arranging "male" links and "female" links an inventive belt may be arrived at.

Furthermore, the ease of assembly and disassembly is determined by the materials from which the links are manufactured and the relationship by the dimensions "a" and "b" and their relative sizes. In this connection it shall be noted that by making "b" larger than "a" an easy fit is provided, and depending on the relative sizes the integrity of the belt is more or less provided. On the other hand in cases where "b" is relatively smaller than "a" it becomes harder to force the stud through the neck portion both when assembling and disassembling the belt, but a firm and strong integrity of the belt is assured. The skilled person will therefore according to circumstances select the relative sizes of "a" and "b" in dependence of the materials involved and the intended use of the belt, when the novel and inventive principles of the present invention as explained above, are disclosed.

## Claims

1. Belt, for use in food processing industries, such as for example slaughterhouses, abattoirs and the like, where said belt comprises a plurality of substantially identical belt links, where each link is detachably connectable to adjacent belt links, and that each link has means for engagement with drive means arranged in a substructure,
**characterised in that**
- the top surface of the belt links is suitable as a cutting surface;
- each link has a leading edge and a trailing edge, and that the link surface between said two edges is substantially continuous;
- male engagement notches are provided along the leading edge, where each notch comprises a main body on which main body at least one stud is provided integral therewith, and that said at least one stud projects from the main body in a direction substantially parallel to the leading edge, and that further the stud has a largest cross section width of "a";
- female engagement means are arranged along the trailing edge, where said female engagement means comprises keyhole shaped apertures, extending substantially perpendicular to the cutting surface, and that the keyhole shaped aperture defines a neck portion and a substantially circular section, such that the width of the neck portion "b" is smaller or equal to "a" and that the diameter of the circular section is equal to or larger than "a".

2. Belt according to claim 1, wherein each link has width perpendicular to the intended travelling direction corresponding to the width of the belt.

3. Belt according to claim 1 or 2, wherein the leading and trailing edges of the belt links are parallelly and mutually offset in the belts longitudinal direction, such that a substantial constant gap of less than 3 mm, preferably less than 2 mm and most preferred less than 1 mm occurs between the leading and trailing edges of adjacent belt links, when the belt is travelling horizontally.

4. Belt according to claim 1, 2 or 3 wherein the female engagement means of the belt links are provided in an engagement section, said engagement section extending rearwardly of the belt link, such that the trailing edge of each link comprises engagement sections alternating with cut-outs substantially corresponding to the engagement notches on an adjacent belt link, and that optionally the engagement sections rearmost vertical projection on a substantial part of the surface of the engagement section is offset in the longitudinal direction of the belt, and that corresponding forward offset section is provided in the leading edge.

5. Belt according to any of the preceding claims wherein the stud is provided with two parallel straight sections, which sections are parallel to the top surface of the link, such that the distance between the parallel straight sections is less than "a".

6. Belt according to any preceding claim wherein the underside of each link comprises a ridge, arranged parallel to the leading and trailing edges, and that the lowermost point of said ridge, when the top surface is horizontal is at the same level as the lowermost points of the engagement notches and female engagement means, and that from the lowermost points of the ridge the material thickness of the belt link diminishes towards the leading and trailing edges respectively, such that the material thickness along the edges is substantially nil, apart from the sections where engagement means and notches are provided.

7. Belt according to any preceding claim wherein in each link, the uppermost part of the circular section of the keyhole apertures, when the top surface is horizontal, slopes upwards, such that drainage of liquid trapped in the keyhole is facilitated.

8. Belt link for use in a meat cutting belt according to any of claims 1 to 7, **characterised in that** the link is made from an injection mouldable material in an injection moulding process.

9. Process for the manufacture of a belt according to any preceding claim, **characterised in that** during the injection moulding process the leading edge is maintained at a lower temperature than the trailing edge, and that belt links are assembled immediately after leaving the injection moulding machine, such that the insertion of the studs into the female engagement means on adjacent links is eased due to the different temperatures and thereby different relative thermo-dependent sizes of the studs and neck portions respectively.
